# EUROPÄISCHE PATENTSCHRIFT

(11) **EP 0 526 394 B1**
(45) Veröffentlichungstag und Bekanntmachung des Hinweises auf die Patenterteilung: **15.03.1995**
(21) Anmeldenummer: 92810507.1
(22) Anmeldetag: 03.07.1992
(51) Int. Cl.: B01J 2/00, B01J 2/16

(54) **Verfahren und Einrichtung zum Beschichten von Teilchen**
Process and apparatus for coating particles
Procédé et dispositif pour enrober des particules

(30) Priorität: 11.07.1991 CH 2068/91
(43) Veröffentlichungstag der Anmeldung: 03.02.1993
(73) Patentinhaber: GLATT GMBH, 79589 Binzen (DE)
(72) Erfinder: Hirschfeld, Peter Fritz Franz, W-7800 Freiburg (DE); Weh, Manfred, W-7859 Istein (DE)
(74) Vertreter: Eder, Carl E.

(56) Entgegenhaltungen:
- EP-A- 0 244 550
- DE-A- 3 237 303
- FR-A- 2 628 014

## Beschreibung

Die Erfindung betrifft ein Verfahren und eine Einrichtung zum Beschichten von Teilchen. Das Verfahren und die Einrichtung dienen - genauer gesagt - zum chargenweisen Beschichten von Teilchen mit einem beim Auftragen mindestens zum Teil flüssigen Überzugsmaterial.

Die zu beschichtenden Teilchen können zum Beispiel mindestens ein Enzym - wie eine Protease, Lipase oder Maltase - enthalten und zum Beispiel zur Verwendung als Bestandteil eines Waschmittels vorgesehen sein. Des weitern können Teilchen beschichtet werden, die mindestens einen pharmazeutischen Wirkstoff - zum Beispiel ein Antibiotikum, Ibuprofen, Theophyllin oder Diclophenac - enthalten. Ferner können die Teilchen mindestens eine ebenfalls als pharmazeutischen Wirkstoff und/oder als Nährstoff und/oder als Nahrungsmittel-Zusatzstoff dienende organische Säure - wie Zitronensäure oder Ascorbinsäure - und/oder ein Salz einer solchen Säure aufweisen. Des weitern können die Teilchen beispielsweise mindestens ein Pflanzenschutzmittel enthalten.

Eine aus der DE-C-2 030 104 bekannte Einrichtung besitzt einen Behälter und einen in diesem um eine vertikale Achse drehbaren Rotor mit einer Scheibe, welche die untere Begrenzung eines Bearbeitungsraums bildet. Zwischen der Wandung des Behälters und dem Rand der Scheibe ist ein Ringspalt vorhanden. Im Behälter ist oberhalb der Scheibe eine Sprühdüse angeordnet. Beim Betrieb wird die Scheibe gedreht. Die Teilchen werden abwechselnd auf der Scheibe nach aussen bewegt und durch ein aufwärts durch den genannten Ringspalt hindurch strömendes Prozess-Gas angehoben. Die bewegten Teilchen werden dabei von oben her mit einem flüssigen Überzugsmaterial besprüht und danach getrocknet.

Einrichtungen ähnlicher Art sind auch aus der WO-A-88/01904 bekannt. Diese letztgenannten Einrichtungen dienen hauptsächlich zum Agglomerieren von Teilchen. Es ist jedoch auch die Möglichkeit erwähnt, diese Einrichtungen zum Beschichten von Teilchen zu verwenden und die Teilchen hierzu mit mindestens einer Sprühdüse, die oberhalb des Bettes der auf der Scheibe liegenden Teilchen angeordnet ist, mit einem Lack zu besprühen.

Die bei den bekannten Verfahren und Einrichtungen verwendeten Überzugsmaterialien bestehen üblicherweise aus Lösungen und/oder Dispersionen, die beim Aufsprühen einen grossen, typischerweise etwa 70 bis 95 Gew.% betragenden Anteil von flüssigem Lösungs- und/oder Dispersionsmedium enthalten. Ein wesentlicher Nachteil der vorgängig beschriebenen, bekannten Verfahren und Einrichtungen besteht daher darin, dass für das normalerweise mit Hilfe heisser Luft erfolgende Trocknen der besprühten Teilchen viel Energie und Zeit benötigt werden. Wenn die Teilchen hitzeempfindliche Stoffe - wie beispielsweise Enzyme oder Antibiotika - enthalten, muss der Trocknungsvorgang zur Vermeidung einer Schädigung der besagten Stoffe bei entsprechend niedriger Temperatur durchgeführt werden und erfordert dann noch mehr Zeit als bei Verwendung heisser Luft. Ferner kann das beim Trocknen der Überzüge verdampfende Lösungs- und/oder Dispersionsmedium in den Überzügen Poren und aus aufgeplatzten Blasen entstandene Buckel verursachen. Poröse Überzüge sind daher - zumindest bei dünner Bemessung - undicht, wodurch die in vielen Fällen durch die Überzüge angestrebte Abschluss- und/oder Schutzwirkung beeinträchtigt wird oder nur durch eine extrem dicke Bemessung der Überzüge noch einigermassen erreicht werden kann. Zudem ist in vielen Fällen auch die durch die Poren und Buckel verursachte Aufrauhung der Oberfläche unerwünscht.

Bei den bekannten Verfahren und Einrichtungen wird als Lösungs- und/oder Dispersionsmedium häufig Wasser verwendet. Dies kann jedoch beim Beschichten von Teilchen mit hydrolysierbaren Stoffen nachteilig sein.

Des weitern sind verschiedene zur Bildung von Überzügen verwendete Stoffe - zum Beispiel Wachse - nicht in Wasser, sondern nur in organischen Lösungsmitteln löslich. Das Beschichten mit Überzugsmaterialien, welche organische Lösungsmittel enthalten, bringt jedoch viele Probleme mit sich, weil organische Lösungsmittel mehr oder weniger stark giftig sowie häufig brennbar sind und daher nicht in die Umwelt gelangen sollten.

Der Erfindung liegt daher die Aufgabe zugrunde, ein Verfahren und eine Einrichtung zu schaffen, welche Nachteile der bekannten Verfahren und Einrichtungen zum Beschichten von Teilchen beheben. Dabei wird insbesondere ausgehend von den bekannten Verfahren und Einrichtungen, bei denen eine Lösung und/oder Dispersion auf die Teilchen aufgesprüht wird, angestrebt, den Energie- sowie Zeitaufwand zu reduzieren und kompakte, d.h. porenfreie, sowie möglichst glatte Überzüge zu bilden. Ferner soll ermöglicht werden, auf die Verwendung organischer Lösungsmittel zu verzichten.

Diese Aufgabe wird erfindungsgemäss durch ein Verfahren mit den Merkmalen des Anspruchs 1 und durch eine Einrichtung mit den Merkmalen des Anspruchs 8 gelöst.

Besonders vorteilhafte Ausgestaltungen des Verfahrens und der Einrichtung gehen aus den abhängigen Ansprüchen hervor.

Die zu beschichtenden Teilchen können durch Agglomerieren eines feinkörnigeren Pulvers gebildet sein und aus mindestens annähernd kugelförmigem Agglomerat- oder Granulat-Teilchen bestehen. Die Teilchen können jedoch stattdessen durch Extrudieren und Zerteilen eines Stranges gebildet und etwa walzenförmig sein. Des weitern kann jedes Teilchen aus einem einzigen Kristall bestehen und einen Polyeder bilden. Die Grössen - d.h. die Durchmesser oder sonstige charakteristischen Abmessungen - der Teilchen können zum Beispiel mindestens etwa 0,2 mm und höchstens etwa 4 mm betragen. Dabei sollen die Grössen der zusammen - d.h. in der gleichen Charge - beschichteten Teilchen vorteilhafterweise in einem möglichst engen Bereich liegen.

Das Überzugsmaterial kann zum Beispiel aus einem einzigen Stoff oder aus einer zwei oder mehr Stoffe aufweisenden Mischung bestehen, der bzw. die bei normaler Raum temperatur - d.h. bei etwa 20° C bis 25° C - fest und beim Zersprühen vollständig geschmolzen ist.

Das Überzugsmaterial kann des weitern mindestens einen bei Raumtemperatur festen sowie beim Zersprühen eine Schmelze bildenden, aus einem einzigen Stoff oder einer Mischung bestehenden Teil und noch Feststoffteilchen aufweisen, die beim Zersprühen in der Schmelze dispergiert sind. Dabei soll der Anteil der Schmelze vorzugsweise mindestens 50 Gew.% und beispielsweise mindestens 80 Gew.% vom gesamten Überzugsmaterial betragen, so dass also dieses beim Zersprühen vorzugsweise mindestens zum grössten Teil geschmolzen ist. Die allenfalls in der Schmelze diespergierten Feststoffteilchen sollen ferner vorteilhafterweise wesentlich - zum Beispiel mindestens 5 Mal - kleiner als die zu beschichtenden Teilchen und auch kleiner als die vorgesehene Dicke der Überzüge sein. Es sei angemerkt, dass gewisse in Frage kommende Stoffe und vor allem Mischungen von solchen nicht eine genau definierte Schmelztemperatur, sondern einen Schmelztemperaturbereich haben, in welchem sie beim Erhöhen der Temperatur zuerst weich, sowie plastisch, danach zähflüssig und schliesslich vollkommen flüssig werden. Der untere Grenz- oder Randwert eines solchen Schmelztemperaturbereichs wird als Solidustemperatur und der obere Grenz-oder Randwert als Liquidustemperatur bezeichnet. Im folgenden wird unter Schmelztemperatur in bezug auf einen Schmelztemperaturbereich aufweisende Stoffe oder Mischungen - wenn nichts anderes angegeben wird - die Liquidustemperatur verstanden.

Das Überzugsmaterial oder mindestens dessen beim Zersprühen geschmolzener Anteil hat vorzugsweise eine Schmelztemperatur, die mindestens 35° C, vorzugsweise höchstens 150° C und beispielsweise 40° C bis 120° C beträgt. Falls das Überzugsmaterial bzw. dessen schmelzbarer Anteil einen Schmelztemperaturbereich hat, soll ferner vorzugsweise auch die Solidustemperatur mindestens 35° C und noch besser mindestens 40° C betragen.

Das schmelzbare Überzugsmaterial bzw. dessen schmelzbarer Teil kann zum Beispiel ein Alkan, ein Olefin, ein natürliches oder synthetisches Wachs, einen Polyalkohol, einen Fettsäureester oder eine Mischung von solchen Stoffen aufweisen.

Die vorgängig als mögliche Bestandteile des Überzugsmaterials angegebenen, beim Zersprühen geschmolzenen Stoffe sind zum Teil - mindestens bei der Bildung dünner Überzüge - mehr oder weniger lichtdurchlässig sowie mehr oder weniger farblos. Die eventuell im Überzugsmaterial enthaltenen und beim Zersprühen von diesem in der dessen Hauptbestandteil bildenden Schmelze dispergierten Feststoffteilchen können zum Beispiel aus einem Metalloxid - nämlich etwa Titandioxid - bestehen und als Farbstoff dienen, um die Überzüge lichtundurchlässig zu machen und beispielsweise weiss oder in einer andern Farbe zu färben.

Zudem hat ein Metalloxid, wie zum Beispiel Titandioxid, eine andere - nämlich wesentlich grössere - Wärmekapazität als die meisten der vorgängig angegebenen, beim Zersprühen geschmolzene Stoffe. Im schmelzbaren Hauptbestandteil des Überzugsmaterials dispergierte Feststoffteilchen aus Titandioxid und/oder einem andern Metalloxid können daher beim Beschichten und/oder im unmittelbar an dieses anschliessenden Zeitintervall die Agglomerationsneigung der beschichteten Teilchen reduzieren.

Das auf die Teilchen aufgesprühte Überzugsmaterial enthält vorzugsweise weder ein anorganisches noch ein organisches Lösungsmittel. Dementsprechend brauchen die durch Aufsprühen von Überzugsmaterial auf die Teilchen gebildeten Schichten auch nicht getrocknet zu werden. Durch das erfindungsgemässe Verfahren kann daher der gesamte Zeitaufwand zum Beschichten einer Charge von Teilchen gegenüber vorbekannten Verfahren, bei denen das aufgesprühte Überzugsmaterial ein bei normaler Raumtemperatur flüssiges Lösungs- und/oder Dispersionsmedium enthält, bei gleichen Teilchenmengen und Überzugsdicken um einen zum Beispiel etwa 2 bis 4 betragenden Faktor reduziert werden.

Durch eine geeignete, in der folgenden Ausführungsbeispielbeschreibung noch näher erläuterte Festlegung der Verfahrensparameter kann erreicht werden, dass die beim Aufsprühen des Überzugsmaterials mindestens einen Teil von diesem bildende Schmelze ausreichend schnell erstarrt, um ein Agglomerieren der besprühten Teilchen zu vermeiden. Ferner kann erreicht werden, dass die Überzüge noch plastisch deformierbar sind, wenn die Teilchen nach dem Aufsprühen des Überzugsmaterials auf dem Rotor über dessen Auflagefläche und/oder übereinander rollen und/oder gleiten, so dass die Überzüge verdichtet und geglättet werden. Es können daher Überzüge gebildet werden, die porenfrei und auch bei geringer Dicke vollkommen dicht sind. Ferner können Überzüge mit gleichmässigen Dicken und glatten Oberflächen gebildet werden. Falls die zu beschichtenden Teilchen kugelförmig sind, können beim Beschichten insbesondere Überzüge gebildet werden, deren Oberflächen praktisch genau kugelförmig sind. Die glatten Oberflächen der Überzüge ergaben - insbesondere bei kugelförmigen Teilchen - eine gute Rieselfähigkeit und Schüttbarkeit der Teilchen. Die Überzüge können je nach Bedarf zum Beispiel etwa 0,001 mm bis 0,5 mm dick gemacht werden, wobei die bei gegebenen Verfahrensparametern hergestellten Überzüge in einem engen Bereich liegende Dicken haben können.

Der Erfindungsgegenstand wird nun anhand eines in der Zeichnung dargestellten Ausführungsbeispiels erläutert. In der Zeichnung zeigt
die Figur 1 eine schematische Darstellung einer Einrichtung zum Beschichten von Teilchen mit einem vereinfacht im Vertikalschnitt gezeichneten, einen Rotor enthaltenden Behälter,
die Figur 2 einen vereinfachten Horizontalschnitt durch einen Teil des Behälters in grösserem Massstab als die Figur 1 und
die Figur 3 einen vereinfachten Längsschnitt durch das Sprühorgan der Einrichtung in noch grösserem Massstab als die Figur 2.

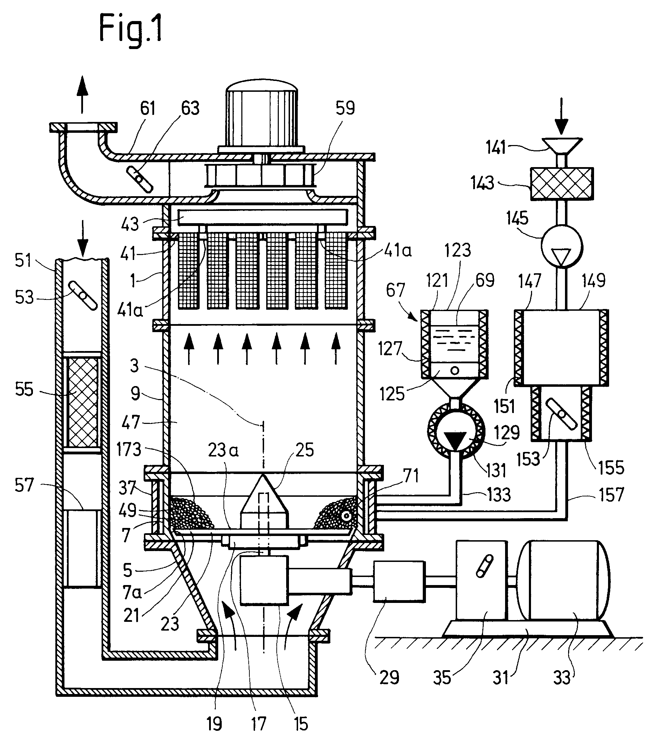

Die in der Figur 1 ersichtliche Einrichtung weist einen Behälter 1 auf, der von einem nicht gezeichneten Gestell gehalten ist. Der Behälter 1 hat eine vertikale Achse 3 und ist im allgemeinen rotationssymmetrisch zu dieser. Die Wandung des Behälters ist aus mehreren, mindestens zum Teil lösbar miteinander verbundenen Teilen gebildet und besitzt einen Mantel mit einem am untern Behälterende angeordneten, sich nach oben konisch erweiternden Mantelabschnitt 5. Dieser ist an seinem oberen Ende mit einem Mantelabschnitt 7 verbunden, dessen Innenfläche am untern Ende einen sich nach oben konisch erweiternde Sitz 7a bildet und oberhalb von diesem zylindrisch ist. Über dem Mantelabschnitt 7 befindet sich ein mehrteiliger zylindrischer Mantelabschnitt 9.

Eine Lager- und Getriebeeinheit 15 ist in dem vom konischen Mantelabschnitt 5 begrenzten Teil des Behälters angeordnet und besitzt ein mit Armen am konischen Mantelabschnitt 5 befestigtes Gehäuse. In der Einheit 15 ist eine Welle 17 um die Achse 3 gelagert. Ein um die Achse 3 drehbarer Rotor 21 ist oberhalb der Einheit 15 mit einer von der Aussenseite des Behälters manuuell betätigbaren Stellvorrichtung 19 entlang der Welle 17 höhenverstellbar auf dieser angeordnet. Der Rotor 21 ist ferner durch eine Rutschkupplung mit der Welle 17 verbunden, so dass er durch diese gedreht werden kann. Der Rotor 21 besitzt eine kreisförmige Scheibe 23. Diese hat auf ihrer obern Seite eine ebene Auflagefläche 23a und an ihrem Rand eine konische Randfläche, deren Neigungswinkel gleich demjenigen der den Sitz 7a bildenden Fläche ist. Die Scheibe 23 kann von einer untern Endstellung, in der ihre Randfläche mindestens annähernd dicht auf dem Sitz 7a aufliegt, nach oben in Stellungen verschoben werden, in denen zwischen der Wandung des Behälters 1 und ihrem Rand ein Ringspalt vorhanden ist. Dessen radiale Breite kann durch Einstellen der Höhe der Scheibe verändert werden. Der Rotor besitzt noch eine auf der obern Seite der Scheibe 23 in deren Zentrum angeordnete Kappe 25, deren Aussenfläche sich zum grössten Teil nach oben konisch verjüngt. Im Gehäuse der Lager- und Getriebeeinheit 15 ist ein Kegelrad-Getriebe angeordnet, das die Welle 17 über ein Drehmoment-Messorgan 29 mit einer Antriebsvorrichtung 31 verbindet, die einen elektrischen Motor 33 und ein Getriebe 35 zum stufenlosen Einstellen der Drehzahl besitzt. Es sei angemerkt, dass weitere Einzelheiten sowie Ausbildungsmöglichkeiten der Lager- und Getriebeeinheit 15, der Stellvorrichtung 19, des Drehmoment-Messorgans 29 und der Antriebsvorrichtung 31 in der bereits in der Einleitung zitierten WO-A-88/01904 und auch in der US-A-4 323 312 beschrieben sind.

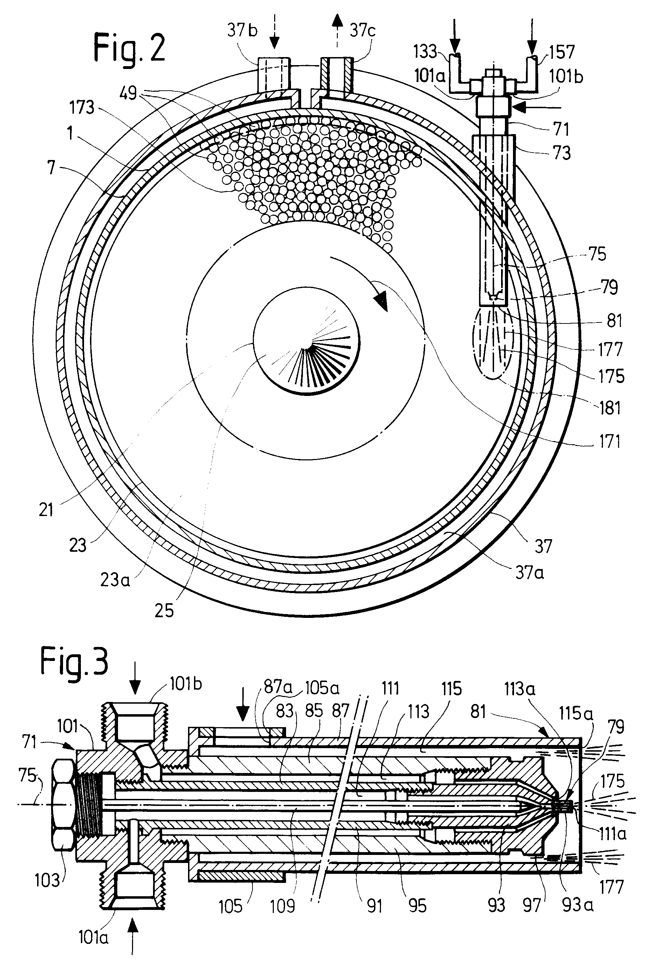

Die Wandung des Behälters 1 ist beim Mantelabschnitt 7 mit einer Heiz- und/oder Kühlvorrichtung 37 versehen. Wie es besonders deutlich in der Figur 2 ersichtlich ist, weist diese als Hauptbestandteil eine Schale auf, welche zusammen mit dem Mantelabschnitt 7 einen diesen annähernd umschliessenden Hohlraum begrenzt, der als Durchgang 37a für ein Heiz- und/oder Kühlfluid - beispielsweise Wasser - dient. An den beiden Enden des Durchgangs ist je ein Anschluss 37b bzw. 37c vorhanden, von denen sich der Anschluss 37b beim tiefsten und der Anschluss 37c beim höchsten Bereich des Durchgangs 37a befindet.

Die verschiedenen Teile der Wandung des Behälters 1 bestehen vorzugsweise im wesentlichen - d.h. abgesehen von einem allenfalls vorhandenen, durchsichtigen Fenster sowie von Dichtungen und dergleichen - aus mindestens einem metallischen Material, etwa rostfreiem Stahl. Die Wandung und/oder die Heiz- und/oder Kühlvorrichtung 37 können jedoch mit einer Wärmeisolation versehen sein, falls die vorgesehenen Betriebsarten und -temperaturen dies erfordern.

Ein Filter 41 ist oberhalb des Rotors 21 im Behälter 1 angeordnet und besitzt zwei etwa gleich grosse Sektionen 41a, die wahlweise mit einem Rüttler 43 gerüttelt werden können. Der unten durch den Rotor 21 und oben durch das Filter 41 begrenzte Bereich des Innenraums des Behälters 1 bildet einen gasdicht gegen die Umgebung abgeschlossenen Bearbeitungsraum 47 zum Aufnehmen der zu bearbeitenden, nämlich zu beschichtenden Teilchen 49.

Gasleit- und Gasfördermittel weisen eine Gaszuleitung 51 auf, die einen nicht ersichtlichen Umgebungsluft-Einlass über ein Durchfluss-Regulierorgan 53, ein Filter 55 sowie eine Heiz- und/oder Kühlvorrichtung 57 mit einer am untern Ende des konischen Mantels 5 des Behälters 1 vorhandenen Öffnung verbindet. Zu den Gasleit- und Gasfördermitteln gehört ferner eine zum Saugen ausgebildete Pumpvorrichtung 59 mit einem oberhalb des Filters 41 im oder am Behälter 1 angeordneten Flügelrad. Der Ausgang der Pumpvorrichtung 59 ist über eine Gasableitung 61 und ein Durchfluss-Regulierorgan 63 mit einem in die Umgebung mündenden Auslass verbunden.

Die Einrichtung ist mit Zufuhrmitteln 67 zum Zuführen und Zersprühen eines Überzugsmaterials 69 versehen. Die Zufuhrmittel 67 weisen ein auch in der Figur 2 und ferner separat in der Figur 3 ersichtliches, längliches, gerades Sprühorgan 71 auf. Dieses ist mit einer an der Heiz- und/oder Kühlvorrichtung 37 und/oder am Mantelabschnitt 7 befestigten Hülse 73 lösbar am Behälter 1 befestigt und ragt durch dessen Mantelabschnitt 7 hindurch in den Bearbeitungsraum 47 hinein. Der Bearbeitungsraum 47 und der Durchgang 37a sind dabei bei der Durchdringungsstelle des Sprühorgans 71 dicht gegeneinander und gegen die Umgebung abgeschlossen. Das Sprühorgan 71 besitzt eine gerade Achse 75 und ist im allgemeinen rotationssymmetrisch zu dieser. Die Achse 75 des Sprühorgans ist horizontal sowie windschief zur Achse 3 des Behälters und kreuzt diese also nicht. Die Sprühorgan-Achse 75 kreuzt den Rand der Scheibe 23 in der in der Figur 2 gezeichneten, vertikalen Draufsicht unter einem höchstens 60° und vorzugsweise höchstens 45° betragenden Winkel. Beim sich im Bearbeitungsraum 47 befindenden Ende des Sprühorgans bildet dessen Achse 75 - in vertikaler Draufsicht - einen höchstens 45° und besser höchstens 30° betragenden Winkel mit einem zur Achse 3 konzentrischen Kreis und ist nämlich fast oder ungefähr tangential zu einem solchen Kreis.

Der Durchmesser der Scheibe 23 kann zum Beispiel etwa im Bereich von 20 cm bis 200 cm liegen. Ferner kann der Rotor 21 beim Besprühen in eine Stellung gebracht werden, in der er sich vorzugsweise höchstens 2 cm und beispielsweise höchstens oder ungefähr 1 cm über seiner tiefst-möglichen Stellung befindet, in der er den Sitz 7a abschliesst. Der sich im Bearbeitungsraum 47 befindende Abschnitt des Sprühorgans 71 kann einen beispielsweise etwa 1 cm bis 3 cm und nämlich etwa annähernd 2 cm betragenden Radius haben. Die Sprühorgan-Achse 75 kann sich dann - abhängig vom Durchmesser der Scheibe 23 - höchstens etwa 10 cm, vorzugsweise höchstens 6 cm und zum Beispiel 3 cm bis 5 cm über der Auflagefläche 23a angeordnet sein, wenn sich der Rotor 21 in seiner tiefst-möglichen Stellung und/oder in seiner während des Sprühvorgangs eingenommenen Stellung befindet. Die Sprühorgan-Achse 75 ist ferner vorzugsweise höchstens 30% und beispielsweise höchstens 20% oder sogar nur höchstens 10% vom Durchmesser der Scheibe 23 über deren Auflagefläche 23a, wenn der Rotor 21 sich in seiner tiefst-möglichen Stellung und/oder in seiner beim Sprühvorgang eingenommenen Stellung befindet.

Das Sprühorgan 71 besitzt eine innere Düse 79, die als sogenannte Zweistoffdüse ausgebildet ist, zum Zersprühen des Überzugsmaterials 69 dient und auch als Überzugsmaterial-Düse 79 bezeichnet wird. Das Sprühorgan 71 besitzt des weitern eine äussere Düse 81, die auch als Hüll-Gas-Düse 81 bezeichnet wird. Das Sprühorgan weist drei längliche, zur Achse 75 koaxiale, sowie im allgemeinen rotationssymmetrische, einander umschliessende Hülsen 83, 85, 87, nämlich eine innere Hülse 83, eine intermediäre Hülse 85 und eine äussere Hülse 87 auf. Die innere Hülse 83 besteht aus einem im allgemeinen zylindrischen Rohr 91 und einem durch verschraubte Gewinde mit diesem verbundenen Auslasselement 93. Das letztere hat - anschliessend an das Rohr 91 - einen zylindrischen Abschnitt, einen sich von diesem weg konisch verjüngenden Abschnitt und an seinem freien Ende einen dünnern zylindrischen Endabschnitt 93a. Die intermediäre Hülse 85 besteht ebenfalls aus einem im allgemeinen zylindrischen Rohr 95 und einem durch eine Gewindeverbindung mit diesem verbundenen Auslasselement 97. Die sich in der Figur 3 rechts befindenden Enden der drei Hülsen 83, 85, 87 sind im Bearbeitungsraum 47 angeordnet. Das Sprühorgan 71 besitzt an seinem sich in der Figur 3 links und ferner ausserhalb des Behälters 1 befindenden Ende ein Verbindungselement 101 mit einem durchgehenden, axialen, abgestuften, mit Innengewinden versehenen Loch. Die Rohre 91, 95 der beiden Hülsen 83 bzw. 85 sind lösbar in diese Innengewinde eingeschraubt und zudem gegen das Verbindungselement 101 abgedichtet. Das Verbindungselement 101 ist mit zwei je eine Gewindemuffe bildenden Abschnitten versehen. Die eine dieser Muffen dient als Überzugsmaterial-Einlass 101a des Sprühorgans. Die andere Muffe dient als erster Gas-Einlass 101b oder Sprüh-Gas-Einlass 101b des Sprühorgans. Das den Hülsen 83, 85, 87 abgewandte Ende des axialen Lochs des Verbindungselements 101 ist durch ein lösbar eingeschraubtes Verschlusselement 103 dicht abgeschlossen. Die im wesentlichen aus einem zylindrischen Rohr bestehende, äussere Hülse 87 ist an ihrem sich in der Figur 3 links befindenden Ende lösbar oder unlösbar sowie dicht mit der mittleren Hülse 85 und/oder dem Verbindungselement 101 verbunden und besitzt in der Nähe dieses Endes ein ihren Mantel durchdringendes Loch, das einen zweiten Gas-Einlass und/oder Hüll-Gas-Einlass 87a bildet. Ein die äussere Hülse 87 umschliessender, um diese drehbarer Stellring dient als Durchfluss-Regulierorgan 105 und besitzt ein Loch 105a. Dieses kann durch Drehen des Regulierorgans 105 wahlweise vollständig oder zu einem mehr oder weniger grossen Teil mit dem den Hüll-Gas-Einlass 87a bildenden Loch der Hülse 87 zur Deckung gebracht oder gegen dieses versetzt werden, so dass der Durchlassquerschnitt des von den beiden Löchern gebildeten Durchgangs verändert oder der Hüll-Gas-Einlass 87a des Sprühorgans 71 sogar mehr oder weniger dicht abgeschlossen werden kann. Am Verschlusselement 103 ist ein zur Achse 75 koaxialer Stift 109 befestigt, der sich in der inneren Hülse 83 annähernd bis zu deren Endabschnitt 93a erstreckt.

Der Überzugsmaterial-Einlass 101a hat ein in den Innenraum der innern Hülse mündendes Loch. Der vom Stift 109 frei gelassene Bereich des Innenraums der innern Hülse 83 bildet einen innern und/oder Überzugsmaterial-Durchgang 111. Dieser hat - in der Figur 3 von links nach rechts - einen zylindrischen Hauptabschnitt, einen sich konisch verjüngenden Abschnitt und einen innern und/oder Überzugsmaterial-Auslass 111a, der vom zylindrischen Loch des Auslasselement-Endabschnitts 93a gebildet ist und in den Bearbeitungsraum 47 mündet.

Der erste Gas-Einlass bzw. Sprüh-Gas-Einlass 101b hat ein Loch, das in einen zwischen der innern Hülse 83 und der mittleren Hülse 85 vorhandenden Hohlraum mündet. Dieser bildet einen intermediären und/oder Sprüh-Gas-Durchgang 113, hat einen kreisringförmigen Querschnitt und besitzt - in der Figur 3 von links nach rechts - einen im allgemeinen zylindrischen Abschnitt, einen sich konisch verjüngenden Abschnitt und einen kurzen zylindrischen Endabschnitt, der in den Bearbeitungsraum mündet und einen intermediären und/oder Sprüh-Gas-Auslass 113a bildet.

Der zweite Gas-Einlass oder Hüll-Gas-Einlass 87a mündet in einen zwischen den Hülsen 85 und 87 vorhandenen Hohlraum. Dieser dient als äusserer und/oder Hüll-Gas-Durchgang 115 und bildet an seinem sich im Behälter 1 befindenden Ende einen im allgemeinen kreisringförmigen, in den Bearbeitungsraum 47 mündenden, äussern und/oder Hüll-Gas-Auslass 115a. Die äussere Hülse 87 kann in der Nähe des dem Verbindungselement 101 abgewandten Endes des Rohrs 95 der intermediären Hülse 85 an dieser mit nicht gezeichneten Abstandhaltemitteln abgestützt sein. Diese Abstandhaltemittel sollen derart ausgebildet sein, dass sie den Gas-Durchfluss durch den Durchgang 115 möglichst wenig behindern und können zum Beispiel aus einigen um den Umfang der intermediären Hülse herum verteilten, an deren Rohr 95 oder an der äussern Hülse 87 befestigten Distanzstücken oder aus einem mit über seinen Umfang verteilten Löchern und Stegen versehenen Ring bestehen.

Das Sprühorgan besteht zum Beispiel im wesentlichen - d.h. abgesehen von allfälligen Dichtungen - aus metallischem Material, zum Beispiel rostfreiem Stahl. Die äussere Hülse 81 und der Stellring 105 können jedoch eventuell statt aus Stahl aus einem Kunststoff - etwa Polypropylen - bestehen. Ferner kann die intermediäre Hülse 85 und/oder das Verbindungselement 101 und/oder das Verschlusselement 103 eventuell mit einer Wärmeisolation versehen oder statt aus einem metallischen aus einem wärmeisolierenden Material gebildet werden.

Gemäss der Figur 3 ragt der den innern und/oder Überzugsmaterial-Auslass 111a begrenzende Auslasselement-Endabschnitt 93a in axialer Richtung ein wenig aus dem Auslasselement 97 der intermediären Hülse 85 heraus. Ferner ragt das den äussern und/oder Hüll-Gas-Auslass 115a begrenzende Ende der äussern Hülse 87 in axialer Richtung ein wenig über die innere Hülse 83 und dementsprechend auch über die intermediäre Hülse 85 hinaus. Der äussere und/oder Hüll-Gas-Auslass 115a umschliesst also die Auslässe 111a und 113a. Im übrigen sind alle drei Auslässe 111a, 113a, 115a koaxial sowie rotationssymmetrisch zur Sprühorgan-Achse 75. Dementsprechend liegen die Zentren der Mündungen der Auslässe 111a, 113a, 115a auf der Sprühorgan-Achse 75 und also auch in dem für diese Achse angegebenen Höhenbereich oberhalb der Auflagefläche 23a der Scheibe 23.

Die Zufuhrmittel 67 weisen eine Schmelzvorrichtung 121 auf. Diese besitzt zum Beispiel einen Speicher 123, der derart bemessen ist, dass er mindestens die zum Beschichten einer Charge von Teilchen 49 erforderliche Menge des Überzugsmaterials 69 aufnehmen kann. Der Speicher 123 besitzt an seiner unteren Seite einen zum Beispiel mit einer Absperrvorrichtung 125 versehenen Ausgang, wobei die Absperrvorrichtung etwa einen Schieber aufweisen kann. Die Schmelzvorrichtung 121 weist eine Heizvorrichtung 127 auf, die zum Beispiel mindestens einen elektrischen Heizwiderstand oder mindestens einen Durchgang für ein Heizfluid besitzt und mit welcher die Wandung des Speichers 123 oder zumindest das in diesem enthaltene Überzugsmaterial 69 und beispielsweise auch die Absperrvorrichtung 125 erhitzt werden können. Der absperrbare Ausgang der Schmelzvorrichtung ist mit einer Förder- und Dosiervorrichtung 129 verbunden, die zum Beispiel durch eine Schlauchpumpe oder einen Schneckenförderer gebildet ist und beispielsweise mit einer Heizvorrichtung 131 beheizbar ist. Der Ausgang der Förder- und Dosiervorrichtung 129 ist über eine Leitung 133 mit dem Überzugsmaterial-Einlass 101a des Sprühorgans 71 verbunden.

Die Zufuhrmittel 67 weisen des weitern eine Vorrichtung zum Zuführen von Sprüh-Gas auf. Diese Vorrichtung besitzt einen Lufteinlass 141, der über ein Filter 143 und eine Pumpe 145 mit einem Gaserhitzer 147 verbunden ist. Dieser besitzt zum Beispiel einen zum Speichern von Druckluft dienenden Speicher 149 sowie eine Heizvorrichtung 151. Der Ausgang des Gaserhitzers 147 ist über ein beispielsweise ebenfalls mit einer Heizvorrichtung 155 versehenes Durchfluss-Regulier-und Absperrorgan 153 sowie eine Leitung 157 mit dem ersten Gas-Einlass bzw. Sprüh-Gas-Einlass 101b des Sprühorgans 71 verbunden. Im übrigen können die Schmelzvorrichtung 121, die Förder- und Dosiervorrichtung 129, der Gaserhitzer 147, das Durchfluss-Regulier- und Absperrorgan 153 und die Leitungen 133, 157 zum Beispiel noch Wärmeisolationen aufweisen und/oder zum Teil aus wärmeisolierendem Material gebildet sein. Nötigenfalls kann die zum Zuführen des geschmolzenen Überzugsmaterials 69 zum Sprühorgan 71 dienende Leitung 133 zudem noch mit einer Heizvorrichtung ausgerüstet sein.

Die Einrichtung ist noch mit Mitteln zum Einbringen der zu beschichtenden Teilchen in den Bearbeitungsraum 47 des Behälters 1 und zum Entnehmen der beschichteten Teilchen versehen. Diese Mittel können - abhängig von der Grösse des Behälters 1 - in der einen oder andern bekannten Art ausgebildet sein. Die Einrichtung kann zum Beispiel noch eine Hebe- und Senkvorrichtung aufweisen, die am konischen Mantelabschnitt 5 angreift und ermöglicht, diesen wahlweise bei geschlossenem Behälter nach oben gegen den Mantelabschnitt 7 und den am nicht gezeichneten Gestell befestigten Mantelabschnitt 9 zu drücken oder zum Öffnen des Behälters abzusenken. Der Behälter kann jedoch stattdessen oder zusätzlich einen abschliessbaren Einlass und einen abschliessbaren Auslass zum Einbringen der zu beschichtenden Teilchen bzw. zum Entnehmen der beschichteten Teilchen aufweisen.

Des weitern können Sensoren vorhanden sein, um die Temperatur und/oder den Druck des beim Betrieb den Bearbeitungsraum 47 durchströmenden Gases und/oder die Temperatur der im Bearbeitungsraum 47 vorhandenen Teilchen und/oder die Temperatur des dem Sprühorgan 71 zugeführten Überzugsmaterials und/oder die Temperatur der als Sprüh-Gas zugeführten Luft zu messen. Ferner ist eine nicht gezeichnete Steuer- und Überwachungsvorrichtung vorhanden, die mit den Motoren der Antriebsvorrichtung 31, der Pumpvorrichtung 59, der Förder- und Dosiervorrichtung 129, sowie der Pumpe 145 eventuell mit allfälligen Stellorganen der Durchfluss-Regulier- und Absperrorgane, den verschiedenen Heiz- und/oder Kühlvorrichtungen, dem Drehmoment-Messorgan 29 und den allenfalls noch vorhandenen Sensoren verbunden ist. Die Steuer- und Überwachungsvorrichtung weist manuell betätigbare Betätigungsorgane, Anzeige- und/oder Registriergeräte und elektronische sowie eventuell pneumatische und/oder hydraulische Komponenten auf, um den Betriebsablauf zu steuern und zu überwachen, wobei zum Beispiel wahlweise eine manuelle oder automatische Steuerung möglich sein kann.

Im folgenden wird das Verfahren zum Beschichten von Teilchen 49 beschrieben.

Es wird angenommen, dass der Rotor 21 am Anfang nicht rotiert und sich in seiner tiefst-möglichen Stellung befindet, so dass die Scheibe 23 auf dem Sitz 7a aufliegt. Nun bringt man eine Charge zu beschichtender Teilchen 49 in den Bearbeitungsraum 47 und zum Aufliegen auf der Scheibe 23. Die Menge dieser Teilchen 49 ist derart bemessen, dass diese danach bei rotierendem Rotor 21 den sich im Bearbeitungsraum 47 befindenden Abschnitt des Sprühorgans 71 und insbesondere dessen Auslässe 111a, 113a, 115a bedecken sowie umschliessen, wie es in der Figur 1 dargestellt ist.

Wenn die Teilchen 49 in den Behälter 1 eingebracht sind und dieser geschlossen ist, wird der Rotor 21 angehoben, so dass zwischen der Wandung des Behälters - genauer gesagt - dem Sitz 7a und der Scheibe 23 ein Ringspalt entsteht. Ferner wird spätestens beim Anheben des Rotors die Pumpvorrichtung 59 eingeschaltet, so dass diese durch aus der Umgebung angesaugte Luft gebildetes Prozess-Gas durch den Behälter 1 und insbesondere durch den besagten Ringspalt sowie den Bearbeitungsraum 47 hindurch nach oben saugt. Die Durchflussrate dieses Prozess-Gases wird mit Hilfe der Durchfluss-Regulierorgane 53, 63 derart eingestellt, dass das den Ringspalt passierende Prozess-Gas ein Herunterfallen der Teilchen 49 durch den Ringspalt verhindert und die Teilchen eventuell im Bereich des Ringspalts ein wenig anhebt, wobei aber zumindest der grösste Teil der Teilchen noch auf der Scheibe 23 aufliegt und also nicht verwirbelt wird. Die Gaszuleitung 51, das Durchfluss-Regulierorgan 53, das Filter 55, die Vorrichtung 57, der genannte Ringspalt und die Teilchen 49 stellen dem Luftstrom einen Widerstand entgegen, so dass der Druck im Bearbeitungsraum um eine gewisse Druckdifferenz kleiner ist als der in der Umgebung des Behälters herrschende Luftdruck. Diese Druckdifferenz kann durch die Einstellung der Rotorhöhe und die daraus resultierende Breite des genannten Ringspalts sowie durch das Durchfluss-Regulierorgan 53 beeinflusst werden und beträgt zum Beispiel mindestens 1 kPa.

Die zu beschichtenden Teilchen 49 können zum Beispiel aus mindestens annähernd kugelförmigen Enzym-Agglomerat-Teilchen bestehen, die als Zusatz zu einem Waschmittel vorgesehen sind. Als Überzugsmaterial kann zum Beispiel ein Polyalkohol, nämlich niedermolekulares Polyglykol verwendet werden, dessen Schmelztemperatur etwa im Bereich von 56° C bis 60° C liegt. Das durch die Gaszuleitung 51 sowie den zwischen dem Mantel des Behälters 1 und der Scheibe 23 vorhandenen Ringspalt hindurch in den Bearbeitungsraum 47 hinein gesaugt Prozess-Gas kann in diesem Fall Raumtemperatur haben und braucht also mit der Heiz- und/oder Kühlvorrichtung 57 weder beheizt noch gekühlt zu werden. Desgleichen braucht auch der Mantelabschnitt 7 des Behälters 1 mit der Heiz- und/oder Kühlvorrichtung 37 weder beheizt noch gekühlt zu werden. Die sich im Teilchen-Bett 173 befindenden Teilchen haben dann vor dem Besprühen ungefähr Raumtemperatur.

Der Rotor 21 wird nach dem Abheben der Scheibe 23 vom Sitz 7a in der in der Figur 2 durch den Pfeil 171 bezeichneten Drehrichtung gedreht. Die Umfangsgeschwindigkeit der Scheibe 23 kann dabei zum Beispiel im Bereich von 5 m/s bis 30 m/s liegen. Die rotierende Scheibe 23 bewegt die aufliegenden Teilchen 49 um die Achse herum. Die Rotation der Scheibe verursacht zudem eine Zentrifugalkraft. Diese bewegt die unmittelbar auf der Auflagefläche 23a der Scheibe 23 aufliegenden und die sich in geringer Höhe über dieser befindenden Teilchen 49 sowie übrigens auch die an die Scheibe angrenzende Luft von der Achse 3 weg gegen den Mantel des Behälters. Die untern Teilchen bewegen sich daher entlang von mehr oder weniger spiralförmigen Bahnen nach aussen, bis sie vom Mantel des Behälters 1 aufgehalten und durch nachkommende Teilchen sowie durch das zwischen der Scheibe 23 und dem Mantel nach oben strömende Prozess-Gas angehoben werden. Die angehobenen Teilchen bewegen sich dann infolge der Schwerkraft nach unten und gegen die Achse 3 zurück. Die Teilchen bilden dabei auf dem äussern Bereich der Scheibe 23 ein ringförmiges Teilchen-Bett 173, das im Vertikalschnitt etwa die in der Figur 1 gezeichnete Form hat. Beim Drehen des Rotors 21 in der mit dem Pfeil 171 bezeichneten Richtung hat ein sich in vertikaler Blickrichtung momentan unter den Auslässen 11a, 113a, 115a befindender Abschnitt der Scheibe 23 eine Geschwindigkeit oder - genauer gesagt - Tangentialgeschwindigkeit, von der eine betragsmässig grosse Komponente parallel zur Achse 75 des Sprühorgans 71 ist und welche von dessen äusserem Ende zu dessen Auslässen sowie von diesen in den freien Bearbeitungsraum 47 hinein gerichtet ist.

Vor dem Beschichtungsvorgang wird mindestens die zum Beschichten einer Charge von Teilchen 49 erforderliche Menge des sich bei Raumtemperatur im festen Aggregatszustand befindenden Überzugsmaterials 69 in die Schmelzvorrichtung 121 eingebracht, in dieser mindestens auf seine Schmelztemperatur und zweckmässigerweise auf eine etwas grössere Temperatur erhitzt und geschmolzen. Das Überzugsmaterial kann beim Schmelzen zum Beispiel auf eine Temperatur erhitzt werden, die mindestens 5° C oder sogar mindestens 10° C grösser als die Schmelztemperatur ist. Das in der Schmelzvorrichtung 121 geschmolzene Überzugsmaterial 69 wird mit der Förder- und Dosiervorrichtung 129 durch die Leitung 133 dem Überzugsmaterial-Einlass 101a des Sprühorgans 71 zugeführt, wobei die Förder- und Dosiervorrichtung sowie eventuell die Leitung 133 nötigenfalls beheizt werden, um das Überzugsmaterial im flüssigen Zustand zu halten.

Die Pumpe 145 saugt aus der Umgebung Luft an und pumpt diese in den Gaserhitzer 147. Die Luft wird in dessen Speicher 149 mit Hilfe der Heizvorrichtung 147 erhitzt und dann über das beispielsweise ebenfalls beheizte Durchfluss-Regulier- und Absperrorgan 153 als Sprüh-Gas dem Sprüh-Gas-Einlass 101b des Sprühorgans 71 zugeführt. Die das Sprüh-Gas bildende Luft wird durch den Gaserhitzer derart erhitzt, dass sie beim Einströmen in den Sprüh-Gas-Einlass 101b des Sprühorgans eine Temperatur hat, die grösser, nämlich vorzugsweise mindestens 20° C, beispielsweise 30° C bis 40° C und nämlich etwa 35° C grösser als die Schmelztemperatur des Überzugsmaterials ist.

Das dem Überzugsmaterial-Einlass 101a zugeführte geschmolzene Überzugsmaterial strömt durch den innern und/oder Überzugsmaterial-Durchgang 111 zum innern und/oder Überzugsmaterial-Auslass 111a und wird bei diesem durch das aus erhitzter Druckluft bestehende, vom Sprüh-Gas-Einlass 101b durch den intermediären und/oder Sprüh-Gas-Durchgang 113 zum intermediären und/oder Sprüh-Gas-Auslass 113a strömende Sprüh-Gas im Innern des Teilchen-Betts 173 in Tröpfchen zersprüht. Dabei entsteht ein in den Figuren 2 sowie 3 angedeuteter Überzugsmaterial-Strahl 175.

Da der Druck im Bearbeitungsraum 47 unterhalb dem Luftdruck in der Umgebung des Behälters 1 liegt, wird durch den zweiten Gas-Einlass und/oder Hüll-Gas-Einlass 87a - falls dieser durch das Regulierorgan 105 mindestens zum Teil freigegeben ist - aus der Umgebung als Hüll-Gas dienende Luft in den äussern und/oder Hüll-Gas-Durchgang 115 hinein und durch diesen sowie durch den äussern und/oder Hüll-Gas-Auslass 115a hindurch in den Bearbeitungsraum 47 gesaugt. Die Saugwirkung des im Bearbeitungsraum herrschenden Unterdrucks wird noch dadurch unterstützt, dass die Scheibe 23 die auf ihr liegenden Teilchen in vom Sprühorgan 71 weg verlaufender Richtung an dessen Auslässen 111a, 113a, 115a vorbei bewegt. Des weitern ergibt auch der Überzugsmaterial-Strahl 175 noch eine gewisse Saugwirkung. Die durch den äussern und/oder Hüll-Gas-Durchgang 115 strömende Luft bildet einen beim äussern und/oder Hüll-Gas-Auslass 115a in das Teilchen-Bett 173 strömenden Hüll-Gas-Strahl 177, der den Überzugsmaterial-Strahl 175 mindestens bei den Mündungen der Auslässe umhüllt. Die Strahlen 175, 177 sind koaxial zur Sprühorgan-Achse 75. Ferner haben die Strahlen 175, 177 oder - genauer gesagt - die Geschwindigkeiten der sie bildenden Überzugsmaterial-Tröpfchen und Gasmoleküle sowie -atome - zumindest in einer radialen Projektion auf die Achse 75 - eine Komponente, die parallel zur Geschwindigkeit des sich momentan vertikal unter den Auslässen 111a, 113a, 115a und den Strahlen 175, 177 befindenden Bereichs der Scheibe 23 des Rotors 21 ist.

Weil das Sprühorgan 71 in das Teilchen-Bett 173 hineinragt und der Rotor 21 die Teilchen am Sprühorgan vorbei und danach von dessen Auslässen 111a, 113a, 115a wegbewegt, schirmt das Sprühorgan den an seine Auslässe angrenzenden Raumbereich gegen die vorbei bewegten Teilchen 49 ab. Ferner bläst die als Sprüh-Gas dienende Luft und vor allem die den Hüll-Gas-Strahl 177 bildende Luft die Teilchen 49 von den Auslässen des Sprühorgans 71 weg. Im Teilchen-Bett 173 entsteht daher ein an die Auslässe angrenzender Raumbereich, der pro Volumeneinheit wesentlich weniger Teilchen als das restliche Teilchen-Bett und/oder unter Umständen zum Teil überhaupt keine Teilchen enthält und im folgenden Kavität genannt wird. Diese Kavität ist in der Figur 2 schematisch angedeutet und mit 181 bezeichnet. Das Durchfluss-Regulierorgan 105 ermöglicht, die Durchflussrate der als Hüll-Gas dienenden Luft einzustellen und dadurch die Grösse und sonstige Ausbildung der Kavität 181 zu beeinflussen.

Die als Hüll-Gas aus der Umgebung in den zweiten Gas-Einlass und/oder Hüll-Gas-Einlass 87a eingesaugte Luft hat beim Einströmen in das Sprühorgan die in der Umgebung des Behälters 1 herrschende Temperatur - d.h. mehr oder weniger die normale Raumtemperatur - und ist also kühler als das dem Sprühorgan zugeführte, geschmolzene Überzugsmaterial. Die durch den intermediären und/oder Sprüh-Gas-Durchgang 113 strömende, über die Schmelztemperatur des Überzugsmaterials erhitzte, als Sprüh-Gas dienende Luft verhindert jedoch eine Abkühlung des Überzugsmaterials und gewährleistet, dass dieses beim Durchströmen des innern und/oder Überzugsmaterial-Durchgangs 111 flüssig bleibt. Das Sprüh-Gas gibt beim Durchströmen des Durchgangs 113 Wämreenergie an das den Durchgang 115 durchströmende Hüll-Gas, an die Umgebung des Sprühorgans und eventuell auch noch an das Überzugsmaterial ab, so dass sich das Sprüh-Gas beim Passieren des Durchgangs 113 etwas abkühlt. Die Temperatur des Sprüh-Gases ist jedoch beim Anströmen aus dem Sprüh-Gas-Auslass 113a und beim Zersprühen des Überzugsmaterials immer noch grösser als die Schmelztemperatur des letzteren.

Die Grössen der beim Zersprühen des geschmolzenen Überzugsmaterials aus diesem entstehenden Tröpfchen sind vom Druck bzw. der dem Sprühorgan pro Zeiteinheit zugeführten Menge des Sprüh-Gases abhängig. Je grösser der Druck und die pro Zeiteinheit zugeführte Menge des Sprüh-Gases sind, desto kleiner werden die gebildeten Tröpfchen. Die Grössen der Tröpfchen können also mit Hilfe des Durchfluss-Regulier- und Absperrorgans 153 auf zweckmässige Werte eingestellt werden.

Während des Beschichtungsvorgangs kann ein und dasselbe Teilchen mehrmals nacheinander in der Nähe des Überzugsmaterial-Auslasses 111a an diesem vorbei und durch den Überzugsmaterial-Strahl 175 hindurch bewegt und dabei jeweils mit geschmolzenem Überzugsmaterial 69 besprüht werden. Die beim Besprühen und danach stattfindenden Vorgänge sollen nun noch etwas näher erläutert werden.

Wenn die Teilchen 49 in dem Bereich des Überzugsmaterial-Strahls 175 gelangen, sind sie wegen der bei den Auslässen des Sprühorgans 71 vorhandenen Kavität 181 aufgelockert und mindestens zum Teil durch Zwischenräume von einander getrennt. Wenn Tröpfchen des geschmolzenen Überzugsmaterials auf die Teilchen 49 auftreffen, kann sich das zunächst noch flüssige Überzugsmaterial über die Oberflächen der Teilchen ausbreiten, ohne dass die Teilchen durch das Überzugsmaterial agglomeriert werden.

Das Prozess-Gas hat - wie erwähnt - beim Einströmen in den Bearbeitungsraum Raumtemperatur und insbesondere eine Temperatur, die unter der Schmelztemperatur des Überzugsmaterials und - falls dieses einen Schmelztemperaturbereich hat - auch unter der Solidustemperatur des Überzugsmaterials liegt. Das Prozess-Gas kühlt daher die mit geschmolzenem Überzugsmaterial besprühten Teilchen und vor allem das aufgesprühte Überzugsmaterial selbst ab. Da das Hüll-Gas mit Raumtemperatur in das Sprühorgan 71 einströmt, jedoch beim Durchströmen des Durchgangs 115 durch von Sprüh-Gas abgegebene Wärme mehr oder weniger erwärmt wird, ist die Temperatur des Hüll-Gases beim Ausströmen aus dem Hüll-Gas-Auslass 115a von den pro Zeiteinheit zugeführten Mengen des Sprüh-Gases und des Hüll-Gases abhängig. Das Hüll-Gas hat jedoch beim Ausströmen aus dem Hüll-Gas-Auslass noch eine Temperatur, die unter der Schmelztemperatur des Überzugsmaterials und - falls diese einen Schmelztemperaturbereich hat - auch unter der Solidustemperatur liegt. Das Hüll-Gas trägt also ebenfalls zur Abkühlung der besprühten Teilchen unter die Schmelztemperatur bei. Wie bereits erwähnt, kann mit dem Durchfluss-Regulierorgan 105 die pro Zeiteinheit zugeführte Menge der als Hüll-Gas dienenden Luft eingestellt werden, um die Ausbildung der Kavität 181 zu beeinflussen. Da das Hüll-Gas auch zum Kühlen der besprühten Teilchen dient, kann mit dem Durchfluss-Regulierorgan 105 auch das Abkühlen der besprühten Teilchen beeinflusst werden. Wenn frisch besprühte, warme Teilchen andere kühlere Teilchen oder den Mantelabschnitt 7 oder die Scheibe 23 berühren, werden sie bei diesen Berührungen ebenfalls noch durch Wärmeableitung abekühlt.

Das geschmolzene Überzugsmaterial gelangt bei dem an das Aufsprühen auf Teilchen anschliessenden Abkühlen vorübergehend in einen halbfesten oder weichen Zwischenzustand, in dem es nicht mehr flüssig, aber noch gut plastisch deformierbar ist. Wenn sich die besprühten Teilchen von der Kavität 181 entfernen, berühren sie einander und/oder den Mantelabschnitt 7 und/oder die Scheibe 23. Durch diese Berührungen wird das vorher auf die Teilchen aufgesprühte, noch plastisch deformierbare Überzugsmaterial verdichtet und über die Teilchen-Oberflächen verteilt. Dabei werden allfällige, vorher in den vom Überzugsmaterial gebildeten Schichten oder Überzügen vorhandene Poren geschlossen und die Oberflächen der Überzüge geglättet. Eventuell kann der Rotor nach dem Aufsprühen der vorgesehenen Menge Überzugsmaterial noch während einer kurzen Zeitdauer weiter gedreht werden, ohne dass Überzugsmaterial aufgesprüht wird, um die gebildeten Überzüge noch weiter zu verdichten und zu glätten.

Auf diese Weise können Teilchen mit kompakten, porenfreien, gleichmässige Dicken aufweisenden und glatten Überzügen gebildet werden. Diese Dicken können durch Einstellen der Grösse der beim Zersprühen des Überzugsmaterials gebildeten Tröpfchen und durch die Dauer des Beschichtungsvorgangs festgelegt werden.

Die Oberflächen der unbeschichteten Teilchen sind häufig relativ rauh, so dass die durch Beschichten erzeugten Überzüge glattere Oberflächen haben als die unbeschichteten Teilchen. Zudem werden die Oberfläche der beim Besprühen gebildeten Schichten oder Überzüge auf jeden Fall nach dem Besprühen in der vorgängig erläuterten Weise geglättet. Dementsprechend nimmt das zum Drehen des Rotors 21 erforderliche Drehmoment während des Beschichtungsvorgangs ab. Dieses Drehmoment kann mit Hilfe des Drehmoment-Messorgans 29 gemessen werden und gibt dann ein Mass für die Glätte und damit die Qualität der Oberflächen der Überzüge. Die Werte des Drehmoments und/oder dessen zeitliche Änderungen können daher eventuell verwendet werden, um das Verfahren zu steuern und/oder insbesondere den Zeitpunkt für dessen Beendung zu ermitteln.

Nach dem Beschichten einer Charge von Teilchen können diese aus dem Behälter entnommen werden, wobei dies auf eine von der Art der weiter vorne erwähnten Mittel zum Einbringen und Entnehmen der Teilchen abhängige Weise erfolgt. Die Entnahme der Teilchen kann zum Beispiel dadurch erfolgen, dass der Rotor 21 gestoppt und in seine tiefst-mögliche Stellung abgesenkt wird, in der er am Sitz 7a anliegt und den Behälter 1 unterhalb des Bearbeitungsraums 47 abschliesst. Danach kann auch die Pumpvorrichtung 59 ausgeschaltet werden. Des weitern kann dann der konische Mantelabschnitt 5 mit der weiter vorne erwähnten Hebe- und Senkvorrichtung ein wenig abgesenkt werden, so dass man den Mantelabschnitt 7 mitsamt dem Rotor 21 und den auf diesem liegenden Teilchen vorübergehend vom restlichen Behälter wegnehmen kann.

Nach dem Entnehmen der beschichteten Teilchen aus dem Behälter 1 kann wieder eine neue Charge von Teilchen beschichtet werden.

Das Verfahren und die Einrichtung können auf verschiedene Arten modifiziert werden.

Das Überzugsmaterial kann zum Beispiel eine Schmelztemperatur haben, die ober- oder unterhalb des vorgängig für niedermolekulares Polyglykol angegebenen Bereichs und nämlich etwa innerhalb des in der Einleitung genannten Bereichs liegt. Zum Beispiel kann als Überzugsmaterial ein bei etwa 110° C bis 115° C schmelzendes, hochmolekulares Polyglykol oder ein im Bereich von 42° C bis 44° C schmelzendes, synthetisches, aus überhydriertem Triglycerid bestehendes Fett verwendet werden. Wie ebenfalls schon in der Einleitung angegeben, kann das Überzugsmaterial zusätzlich zu einer beim Zersprühen geschmolzenen Hauptkomponente noch feine, in dieser dispergierte Feststoffteilchen, etwa Titandioxidteilchen enthalten.

Wenn das Überzugsmaterial oder dessen zum Schmelzen vorgesehene Komponente eine relativ hohe, zum Beispiel mindestens etwa 80° C betragende Schmelztemperatur hat, kann es vorteilhaft sein, den das Teilchen-Bett 173 umschliessenden Mantelabschnitt 7 des Behälters 1 und das Prozess-Gas mit den Heiz- und/oder Kühlvorrichtung 37 bzw. 57 zu erwärmen. Die Temperaturen des Mantelabschnitts 7 und des Prozess-Gases sollen dabei aber noch unter der Schmelztemperatur des Überzugsmaterials liegen und beispielsweise mindestens 20° C oder mindestens 30° C weniger als diese betragen. Falls das Überzugsmaterial einen Schmelztemperaturbereich hat, sollen die Temperatur des Mantelabschnitts 7 und des Prozess-Gases auch kleiner als die Solidustemperatur des Überzugsmaterials sein. Nötigenfalls kann auch das Hüll- Gas auf etwa die gleiche Temperatur wie das Prozess-Gas erwärmt werden.

Wenn hingegen die Schmelztemperatur des Überzugsmaterials relativ niedrig ist und zum Beispiel weniger als 60° C oder sogar nur höchstens 50° C beträgt, kann es vorteilhaft sein, mit der Heiz- und/oder Kühlvorrichtung 37 den das Teilchen-Bett umschliessenden Mantelabschnitt 7 des Behälters und mit der Heiz- und/oder Kühlvorrichtung 57 das Prozess-Gas zu kühlen. Ferner kann eine Kühlung nützlich sein, wenn die zu beschichtenden Teilchen einen Stoff enthalten, der bereits durch kleine Temperaturerhöhungen beschädigt werden kann. Im übrigen kann eventuell sogar vorgesehen werden, auch das Hüll-Gas zu kühlen.

Wenn die Einrichtung ausschliesslich für Verfahren vorgesehen ist, bei denen der das Teilchen-Bett umschliessende Mantelabschnitt des Behälters und das Prozess-Gas Raumptemperatur aufweisen, können die beiden Heiz- und/oder Kühlvorrichtungen 37 und 57 selbstverständlich weggelassen werden.

Die Einrichtung kann des weitern zwei oder mehr Sprühorgane aufweisen, die um die Achse 3 herum verteilt sind. Ferner kann das bzw. jedes Sprühorgan eventuell geneigt angeordnet werden, wobei aber die Sprühorgan-Achse mit einer vertikalen Geraden einen vorzugsweise mindestens 45° und noch besser mindestens 60° betragenden Winkel bilden soll.

Zudem könnte das bzw. jedes Sprühorgan möglicherweise abgewinkelt und etwa derart angeordnet sein, dass sein sich ausserhalb des Bearbeitungsraums befindender Abschnitt radial zur Achse des Behälters ist. In diesem Fall gelten die vorgängig für die Anordnung der Achse des Sprühorgans gemachten Angaben dann sinngemäss für die Achse des die Auslässe bildenden Teils des Sprühorgans.

Eventuell können auch Mittel vorgesehen werden, um dem Hüll-Gas-Einlass des bzw. jedes Sprühorgans ein Hüll-Gas mit einem Druck zuzuführen, der grösser als der Luftdruck in der Umgebung des Behälters ist.

Des weitern kann die Einrichtung ausgebildet werden, um als Prozess-Gas, als Sprüh-Gas und als Hüll-Gas anstelle von Luft ein anderes Gas - etwa Stickstoff oder Argon - zu verwenden. Ferner kann man eventuell den Sprüh-Gas-Durchgang des Sprühorgans weglassen und das Überzugsmaterial lediglich durch die Einwirkung eines Drucks zersprühen.

## Patentansprüche

1. Verfahren zum Beschichten von Teilchen, die in einen Behälter (1) eingebracht und durch Drehen eines unter ihnen angeordneten, um eine vertikale Achse (3) drehbaren Rotors (21) bewegt werden, so dass sie ein auf dem Rotor (21) aufliegendes Teilchen-Bett (173) bilden, wobei mit mindestens einem Sprühorgan (71) ein Überzugsmaterial (69) auf die Teilchen aufgesprüht wird, dadurch gekennzeichnet, dass mindestens ein Teil des Überzugsmaterials (69) geschmolzen, in geschmolzenem Zustand auf im Teilchen-Bett (173) vorhandene Teilchen aufgesprüht und danach durch Abkühlen verfestigt wird.

2. Verfahren nach Anspruch 1, wobei der verwendete Behälter (1) eine Wandung hat und wobei während der Besprühung der Teilchen ein Prozess-Gas durch einen zwischen der Wandung und dem Rotor (21) vorhandenen Ringspalt hindurch nach oben geleitet wird, dadurch gekennzeichnet, dass die Temperatur des Prozess-Gases kleiner als die Schmelztemperatur vom geschmolzenen Überzugsmaterial (69) bzw. von dessen geschmolzenem Teil ist.

3. Verfahren nach Anspruch 1 oder 2 dadurch gekennzeichnet, dass das Überzugsmaterial (69) im Innern des Teilchen-Bettes (173) aus dem Sprühorgan (71) heraus auf die Teilchen gesprüht wird.

4. Verfahren nach Anspruch 3, dadurch gekennzeichnet, dass das Überzugsmaterial (69) beim Zersprühen einen Überzugsmaterial-Strahl (175) mit einer Achse (75) bildet und derart gerichtet ist, dass die letztere mit einer vertikalen Geraden einen Winkel von mindestens 45° bildet und die Geschwindigkeit des Überzugsmaterials bei der Achse (75) des Überzugsmaterial-Strahls (175) und/oder in einer radialen Projektion auf diese Achse (75) eine Komponente hat, die parallel zur Geschwindigkeit des sich vertikal unter dem Überzugsmaterial-Strahl (175) befindenden Bereich des Rotors (21) ist, wobei die Achse (75) des Überzugsmaterial-Strahls (175) beispielsweise horizontal ist.

5. Verfahren nach einem der Ansprüche 1 bis 4, dadurch gekennzeichnet, dass das Überzugsmaterial (69) mit Hilfe von Sprüh-Gas zersprüht wird, dessen Temperatur grösser als die Schmelztemperatur vom geschmolzenen Überzugsmaterial (69) bzw. von dessen geschmolzenem Teil ist, wobei die Temperatur des Sprüh-Gases vorzugsweise mindestens 20° C und beispielsweise 30° C bis 40° C grösser als die Schmelztemperatur ist.

6. Verfahren nach einem der Ansprüche 1 bis 4, wobei das Überzugsmaterial (69) beim Zersprühen einen aus dem Sprühorgan (71) austretenden Überzugsmaterial-Strahl (175) bildet, dadurch gekennzeichnet, dass ein den Überzugsmaterial-Strahl (175) bei dessen Austritt aus dem Sprühorgan (71) umhüllender Hüll-Gas-Strahl (177) gebildet wird und dass die Temperatur des diesen bildenden Gases kleiner als die Schmelztemperatur vom geschmolzenen Überzugsmaterial (69) bzw. von dessen geschmolzenem Teil ist.

7. Verfahren nach einem der Ansprüche 1 bis 6, dadurch gekennzeichnet, dass mindestens 50 Gew.% des Überzugsmaterials (69) beim Zersprühen von diesem geschmolzen sind und dass die Schmelztemperatur vom geschmolzenen Überzugsmaterial (69) bzw. von dessen beim Zersprühen geschmolzenem Teil mindestens 35° C, höchstens 150° C und beispielsweise 40° C bis 120° C beträgt.

8. Einrichtung zum Beschichten von Teilchen, insbesondere zur Durchführung des Verfahrens nach einem der Ansprüche 1 bis 7, mit einem Behälter (1), einem in diesem um eine vertikale Achse (3) drehbaren Rotor (21) mit einer Auflagefläche (23a) zum Tragen der Teilchen und mindestens einem Sprühorgan (71), um ein Überzugsmaterial (69) auf die Teilchen aufzusprühen, sprühen, gekennzeichnet durch mindestens eine Heizvorrichtung (127, 131) um das Überzugsmaterial (69) oder mindestens einen Teil von diesem vor dem Aufsprühen auf die Teilchen zu schmelzen.

9. Einrichtung nach Anspruch 8, wobei das bzw. jedes Sprühorgan (71) einen Überzugsmaterial-Auslass (111a) hat, dadurch gekennzeichnet, dass das Zentrum der Mündung des Überzugsmaterial-Auslasses (111a) höchstens 6 cm oberhalb der Auflagefläche (23a) des Rotors (21) angeordnet ist, wenn dieser sich in seiner zum Beschichten von Teilchen vorgesehenen Stellung befindet.

10. Einrichtung nach Anspruch 8 oder 9, dadurch gekennzeichnet, dass das bzw. jedes Sprühorgan (71) einen Überzugsmaterial-Auslass (111a) und einen diesen in einer zu dessen Achse (75) paralleler Projektion umschliessenden Sprüh-Gas-Auslass (113a) für ein zum Zersprühen des Überzugsmaterials (69) dienendes Sprüh-Gas aufweist, dass das bzw. jedes Sprühorgan (71) einen den Überzugsmaterial-Auslass (111a) und den Sprüh-Gas-Auslass (113a) in zur Achse (75) des Überzugsmaterial-Auslasses (111a) paralleler Projektion umschliessenden Hüll-Gas-Auslass (115a) zur Erzeugung eines das Überzugsmaterial bei dessen Austritt aus dem Überzugsmaterial Auslass (111a) umschliessenden Hüll-Gas-Strahls (177) besitzt und dass mindestens eine Heizvorrichtung (147, 155) zum Erhitzen des Sprüh-Gases vorhanden ist.

## Claims

1. Method for the coating of particles which are introduced into a container (1) and moved by rotation of a rotor (21), which is arranged under them and rotatable about a vertical axis, so that they form a particle bed (173) on the rotor (21), wherein a coating material (69) is sprayed onto the particles by at least one spray organ (71), characterised thereby, that at least a part of the coating material (69) is melted, sprayed in the molten state on particles present in the particle bed (173) and thereafter solidified by cooling-down.

2. Method according to claim 1, wherein the container (1) being used has a wall and wherein a process gas is led upwardly through an annular gap, which is present between the wall and the rotor (21), during the spraying onto the particles, characterised thereby, that the temperature of the process gas is lower than the melting point of the molten coating material (69) or its molten part.

3. Method according to claim 1 or 2, characterised thereby, that the coating material (69) is sprayed onto the particles out of the spray organ (71) in the interior of the particle bed (173).

4. Method according to claim 3, characterised thereby, that the coating material (69) while being sprayed forms a coating material jet (175) with an axis (75) and is directed in such a manner that the latter is at an angle of at least 45° to a vertical straight line and the velocity of the coating material (69) at the axis (75) of the coating material jet (175) and/or in a radial projection onto this axis (75) has a component which is parallel to the velocity of that region of the rotor (21), which is situated vertically below the coating material jet (175), wherein the axis (75) of the coating material jet (175) is for example horizontal.

5. Method according to one of the claims 1 to 4, characterised thereby, that the coating material (69) is sprayed with the aid of spraying gas, the temperature of which is higher than the melting point of the molten coating material (69) or its molten part, wherein the temperature of the spraying gas is preferably at least 20°C and for example 30°C to 40°C higher than the melting point.

6. Method according to one of the claims 1 to 4, wherein the coating material (69) while being sprayed forms a coating material jet (175) issuing from the spray organ (71), characterised thereby, that a sheathing gas jet (177) is formed, which envelopes the coating material jet (175) on its exit from the spray organ (71) and that the temperature of the gas forming this jet is lower than the melting point of the molten coating material (69) or its molten part.

7. Method according to one of the claims 1 to 6, characterised thereby, that at least 50% by weight of the coating material (69) is melted while it is being sprayed and that the melting point of the molten coating material (69) or the part thereof which is melted during the spraying amounts to at least 35°C, at most 150°C and for example 40°C to 120°C.

8. Equipment for the coating of particles, in particular for the performance of the method according to one of the claims 1 to 7, with a container (1), a rotor (21), which is rotatable therein about a vertical axis (3) with a bearing surface (23a) for carrying the particles and at least one spray organ (71) to apply a coating material (69) onto the particles, characterised by at least one heating device (127, 131) to melt the coating material (69) or at least a part thereof before the spraying onto the particles.

9. Equipment according to claim 8, wherein the or each spray organ (71) has a coating material outlet (111a), characterised thereby, that the centre of the mouth of the coating material outlet (111a) is arranged to be at most 6 centimetres above the bearing surface (23a) of the rotor (21) when this is disposed in its setting provided for the coating of particles.

10. Equipment according to claim 8 or 9, characterised thereby, that the or each spray organ (71) displays a coating material outlet (111a) and a spraying gas outlet (113a), which surrounds this in a projection parallel to its axis (75), for a spraying gas which serves for the spraying of the coating material (69), that the or each spray organ (71) has a sheathing gas outlet (115a), which surrounds the coating material outlet (111a) and the spraying gas outlet (113a) in a projection parallel to the axis (75) of the coating material outlet (111a), for the production of a sheathing gas jet (177) enclosing the coating material on exit from the coating material outlet (111a), and that at least one heating device (147, 155) is present for the heating of the spraying gas.

## Revendications

1. Procédé pour revêtir des particules qui sont introduites dans un récipient (1) et sont mises en mouvement, par la rotation d'un rotor (21) placé sous elles et tournant autour d'un axe vertical (3), de telle manière qu'elles forment un lit de particules (173) reposant sur le rotor (21), une matière de revêtement (69) étant pulvérisée sur les particules au moyen d'au moins un organe de pulvérisation (71), caractérisé en ce que la matière de revêtement est au moins en partie fondue, est pulvérisée à l'état fondu sur les particules présentes dans le lit de particules (173) et est ensuite solidifiée par refroidissement.

2. Procédé selon la revendication 1, dans lequel le récipient (1) utilisé possède une paroi et dans lequel, pendant la pulvérisation sur les particules, un gaz de travail est introduit vers le haut à travers un interstice annulaire présent entre la paroi et le rotor (21), caractérisé en ce que la température du gaz de travail est inférieure à la température de fusion de la matière de revêtement fondue (69) ou de sa partie fondue.

3. Procédé selon la revendication 1 ou 2, caractérisé en ce que la matière de revêtement (69) est pulvérisée sur les particules depuis l'intérieur du lit de particules (173) à partir de l'organe de pulvérisation (71).

4. Procédé selon la revendication 3, caractérisé en ce que la matière de revêtement (69) forme pendant la pulvérisation un jet de matière de revêtement (175) d'axe (75) et dirigé de telle manière que cet axe forme avec la verticale un angle d'au moins 45°, et en ce que la vitesse de la matière de revêtement sur l'axe (75) du jet de matière de revêtement (175) et/ou en projection radiale sur cet axe (75) a une composante qui est parallèle à la vitesse de la zone du rotor (21) située à la verticale au-dessous du jet de matière de revêtement (175), l'axe (75) du jet de matière de revêtement (175) étant par exemple horizontal.

5. Procédé selon l'une quelconque des revendications 1 à 4, caractérisé en ce que la matière de revêtement (69) est pulvérisée à l'aide d'un gaz de pulvérisation dont la température est supérieure à la température de fusion de la matière de revêtement (69) fondue ou de sa partie fondue, la température du gaz de pulvérisation étant de préférence d'au moins 20°C, et par exemple de 30°C à 40°C, supérieure à la température de fusion.

6. Procédé selon l'une quelconque des revendications 1 à 4, dans lequel la matière de revêtement (69) forme pendant la pulvérisation un jet de matière de revêtement (175) sortant de l'organe de pulvérisation (71), caractérisé en ce qu'un jet de gaz enveloppant (177) entourant le jet de matière de revêtement (175) au moment de sa sortie de l'organe de pulvérisation (71) est formé et en ce que la température du gaz le constituant est inférieure à la température de fusion de la matière de revêtement (69) fondue ou de sa partie fondue.

7. Procédé selon l'une quelconque des revendications 1 à 6, caractérisé en ce qu'au moins 50 % en poids de la matière de revêtement (69) sont fondus lors de sa pulvérisation et en ce que, au moment de la pulvérisation, la température de fusion de la matière de revêtement (69) fondue ou de sa partie fondue est d'au moins 35°C et au plus de 150°C, et est comprise par exemple entre 40°C et 120°C.

8. Dispositif pour revêtir des particules, en particulier pour mettre en oeuvre le procédé selon l'une quelconque des revendications 1 à 7, qui comporte un récipient (1), un rotor (21) tournant dans celui-ci autour d'un axe vertical (3) et ayant une surface d'appui (23a) pour porter les particules, et au moins un organe de pulvérisation (71) pour pulvériser une matière de revêtement (69) sur les particules, caractérisé par au moins un dispositif de chauffage (127, 131) pour fondre la matière de revêtement (69) ou au moins une partie de celle-ci avant la pulvérisation sur les particules.

9. Dispositif selon la revendication 8, dans lequel le ou chaque organe de pulvérisation (71) a un orifice de sortie (111a) pour la matière de revêtement, caractérisé en ce que le centre de l'ouverture de cet orifice de sortie (111a) pour la matière de revêtement se trouve au plus 6 cm au-dessus de la surface d'appui (23a) du rotor (21) lorsque celui-ci se trouve dans sa position prévue pour le revêtement des particules.

10. Dispositif selon la revendication 8 ou 9, caractérisé en ce que le ou chaque organe de pulvérisation (71) présente un orifice de sortie (111a) pour la matière de revêtement et un orifice de sortie (113a) pour gaz de pulvérisation entourant la précédente suivant une projection parallèle à l'axe (75) de celle-ci et destinée à un gaz de pulvérisation servant à la pulvérisation de la matière de revêtement (69), en ce que le ou chaque organe de pulvérisation (71) possède un orifice de sortie (115a) pour du gaz enveloppant, pour l'obtention d'un jet (177) de gaz enveloppant entourant la matière de revêtement lorsqu'elle sort de la sortie (111a) de matière de revêtement, et entourant l'orifice de sortie (111a) pour la matière de revêtement et l'orifice de sortie (113a) pour le gaz de pulvérisation, selon une projection parallèle à l'axe (75) de l'orifice de sortie pour la matière de revêtement, et en ce qu'au moins un dispositif de chauffage (147, 155) est prévu pour chauffer le gaz de pulvérisation.
